# EUROPEAN PATENT SPECIFICATION

(11) **EP 3 257 573 B1**
(45) Date of publication and mention of the grant of the patent: **13.03.2019**
(21) Application number: 17176277.6
(22) Date of filing: 15.06.2017
(51) Int. Cl.: B01D 67/00, B01D 69/02

(54) **MODIFIED MEMBRANE**
MODIFIZIERTE MEMBRAN
MEMBRANE MODIFIÉE

(30) Priority: 15.06.2016 IT UA20164398
(43) Date of publication of application: 20.12.2017
(73) Proprietor: Medica S.p.A., 41036 Medolla (IT)
(72) Inventor: MELUCCI, Manuela, 40129 BOLOGNA (IT); ZAMBIANCHI, Massimo, 40129 BOLOGNA (IT); BENFENATI, Valentina, 40129 BOLOGNA (IT); BOCCHI, Letizia, 41036 MEDOLLA (IT)
(74) Representative: Mangini, Simone

(56) References cited:
- DE-A1- 3 004 990
- US-A- 4 192 748
- US-A1- 2015 114 906

## Description

### TECHNICAL FIELD

The present invention relates to a method of making a modified membrane, to a modified membrane and to uses thereof. The invention, moreover, relates to a filtering cartridge containing the modified membrane.

In particular, the present invention relates to porous modified membranes with different geometries and cartridges containing these membranes.

### BACKGROUND OF THE INVENTION

In the field of purification of biological fluids, membranes and fibres made of different polymer materials are used. Notwithstanding the numerous efforts to prepare constantly new filters that are able to improve the separation between different components, there is still the need to identify materials capable of selectively separating some substances.

Membranes having chemically modified surfaces have been proposed. However, chemical modifications of the membrane must not change the intrinsic properties and filtering performances of the membrane.

Many of the materials proposed to date are particularly difficult and costly to produce and/or not sufficiently strong and long lasting.

Sol-gel processes for preparing materials such as glass, aerogel monoliths, thin films, powders and fibres have proved useful for making materials for optics, for sensors, catalyst carriers, etc. (Hench, L. L.; West, J. K.Chem. ReV. 1990, 90, 33.; Mark, J. E. Heterog. Chem. ReV. 1996, 3, 307.; Avnir, D. Acc. Chem. Res. 1995, 28, 328.; Hu˙˙sing, N.; Schubert, U. Angew. Chem., Int. And. Engl. 1998, 37, 22.) .

Hybrid mesoporous materials (K. Ishizu Prog. Polym. Sci. 1998, 23, 1383; Medda SK, de G. Ind. Eng. Chem. Res. 2009; 48:4326-33) based on organosilicates obtained from tetraalkoxysilanes have been used to improve the robustness and mechanical properties of various polymers of technological interest (Haas KH, SchwabSA, RoseK.SurfCoatTechnol1999;111:72-9).

Moreover, the co-condensation of tetraalkoxysilane precursors with functionalized silanes can be used to manufacture porous materials and nanoparticles with particular properties (Frank Hoffmann, Maximilian Cornelius, Jrgen Morell, and Michael Frba Angew. Chem. Int. E. 2006, 45, 3216 - 3251; W. Stober, A. Fink and E. Bohn, J. Colloid Interface Sci., 1968, 26, 62).

US2015/0114906 discloses the coating of porous polymeric membranes using a silanization step.

The object of the present invention is to provide a method of making a modified membrane, a modified membrane, its uses and a filtering cartridge, which allow the drawbacks of the prior art to be at least partially overcome and which are, at the same time, easily and inexpensively implemented.

### SUMMARY

According to the present invention, a method of making a modified membrane, a modified membrane, its uses and a filtering cartridge are provided as described in the independent claims below and, preferably, in any one of the claims directly or indirectly dependent on the independent claims.

Unless explicitly specified to the contrary, the following terms have the meaning indicated below.

In the present text "aliphatic" means a non-aromatic and non-substituted hydrocarbon (unless the contrary is specified), saturated or unsaturated, linear, branched and/or cyclic. Non-limiting examples of aliphatic groups are: t-butyl, ethenyl, 1- or 2-propenyl, cyclohexyl.

In the present text, Cₓ-C_{y} refers to a group that is meant as having from x to y carbon atoms.

In the present text "alkyl" means a saturated aliphatic (i.e., an aliphatic group without double or triple carbon-carbon bonds). Non-limiting examples of alkyls are: methyl, n-propyl, t-butyl, cyclohexyl.

In the present text "aromatic group" means a group having at least one aromatic ring, in particular containing from 5 to 12 members and an electronic system π substantially conjugated. In particular, the aromatic group comprises a monocyclic ring or several fused rings (i.e., rings that share a pair of adjacent and bonded atoms). Each aromatic ring can be aryl (i.e., in which all the members of the ring are carbon atoms) or heteroaromatic (i.e., in which one, two or three of the members of the ring are chosen from N, O, S; the remaining members of the ring are carbon atoms). Non-limiting examples of aromatic rings are: phenyl, naphthalenyl, anthracenyl, pyrrole, furan, thiophene, imidazole, oxazole, thiazole, pyrazole, pyridine, pyrimidine, purine and carbazole (and a combination thereof). In particular, the aromatic rings are chosen in the group: phenyl, thiophene, pyridine (and a combination thereof). More in particular, the aromatic rings are chosen in the group: thiophene, pyridine (and a combination thereof).

The term "aryl", as used in this text, indicates an aromatic group, in which each aromatic ring is aryl. Examples of aryls are: naphthalene and phenanthrene.

In the present text, "aromatic heterocycle" means an aromatic group in which at least one aromatic ring is heteroaromatic. Examples of aromatic heterocycles are: pyrrole, furan, thiophene, pyridine, indole.

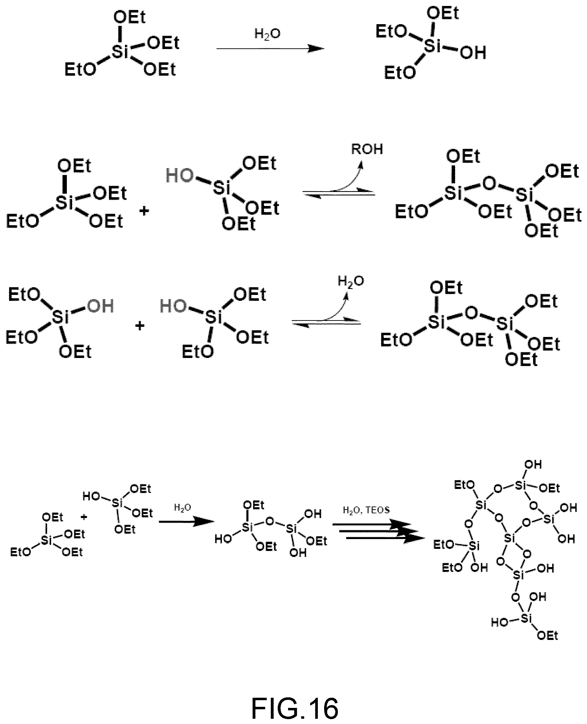

Silanization means carrying out a hydrolysis-condensation process in which at least part of the alkoxysilane moieties are hydrolyzed to silanols and in which condensation reactions lead to the formation of bridging siloxane bonds (i.e., Si-O-Si), which, advantageously, lead to the formation of a lattice. Purely by way of example, Fig. 16 schematically illustrates the reactions that occur when TEOS (tetraethyl orthosilicate or tetraethoxysilane) silanizes.

Aqueous solution means a solution in which the solvent is mostly water. Advantageously, in an aqueous solution the only solvent is water.

In the present text "alkoxy" means an aliphatic group (preferably a C₁-C₅ aliphatic group, advantageously a C₁-C₄ alkyl) bound to the remaining part of the molecule through an oxygen atom. Non-limiting examples of alkoxy groups are: methoxy, ethoxy.

Alkoxysilane moiety means a molecular portion having structure Si-O-Ra, where Ra indicates a C₁-C₄ alkyl, advantageously a C₁-C₂ alkyl, in particular an ethyl.

Trialkoxyorganosilane means a molecule having three alkoxysilane moieties, where the three alkoxy groups of the alkoxysilane moieties are connected to (share) the same silicon atom. In particular, this silicon atom is also bound to an organic residue such as an aliphatic or an aromatic group.

Tetraalkoxysilane means a molecule having four alkoxysilane moieties, where the four alkoxy groups of the alkoxysilane moieties are connected to (share) the same silicon atom. Tetraethoxysilane (TEOS) is an example of tetraalkoxysilane.

Recognition moiety means a moiety capable of bonding to a given substrate or analyte. Advantageously, the substrate and/or the analyte is a biomolecule. According to some advantageous embodiments, the recognition moiety comprises (is) a recognition biomolecule.

Recognition biomolecule means a biomolecule or a portion of a biomolecule. According to some embodiments, the recognition biomolecule is chosen in the group consisting of: proteins, polypeptides, oligopeptides (and a combination thereof). Advantageously, the recognition biomolecule is chosen in the group consisting of proteins, polypeptides (and a combination thereof).

In some cases, the recognition biomolecule comprises (is) a polypeptide. More precisely, the recognition biomolecule comprises (is) a protein. According to some embodiments, the recognition biomolecule comprises (is) an antibody (monoclonal and/or polyclonal).

Oligopeptide means a peptide chain of no more than ten amino acids.

Polypeptide means a peptide chain of more than ten amino acids and less than thirty amino acids.

### BRIEF DESCRIPTION OF THE FIGURES

The invention is described below with reference to the accompanying figures, which illustrate some non-limiting examples of embodiment thereof, wherein:
- Fig. 1 is a diagram of a method in accordance with the present invention;
- Fig. 2 shows some photographs of steps of the method of Fig. 1 applied to a flat membrane of polysulfone;
- Fig. 3 shows some photographs of steps of the method of Fig. 1 applied to hollow fibres of polysulfone (Medisulfone);
- Fig. 4 shows some photographs of steps of the method of Fig. 1 applied to lengths of polysulfone fibres;
- Fig. 5 shows SEM (environmental scanning electron microscope) images of a material (flat membrane) treated in accordance with the present invention;
- Fig. 6 shows SEM (environmental scanning electron microscope) images of a material (hollow fibre) treated in accordance with the present invention;
- Fig. 7 shows two microphotographs taken with a confocal microscope with an illumination at λ = 405 nm, wherein the microphotograph A (on the left) relates to a sample of membrane functionalized with silicates (without antibodies) and the microphotograph B (on the right) relates to a sample of fibre functionalized with silicates (without antibodies);
- Fig. 8 illustrates ATR (attenuated total reflectance) spectra of untreated fibres (spectral curve A), of MS fibres functionalized (without antibodies) with TEOS (spectral curve B) and fibres functionalized (without antibodies) with TMOS (spectral curve C);
- Fig. 9 illustrates ATR (attenuated total reflectance) spectra of untreated membranes (spectral curve A), of membranes functionalized (without antibodies) with TEOS (spectral curve B) and membranes functionalized (without antibodies) with TMOS (spectral curve C);
- Fig. 10 shows photoluminescence spectra of the PyrT3Si at different pHs;
- Fig. 11 illustrates photoluminescence spectra of fibres functionalized (without antibodies) with TEOS and PyrT3Si (spectral curve A), of untreated fibres (spectral curve B), of an untreated membrane (spectral curve C), of TEOS and PyrT3Si sol-gel (spectral curve D) and of a membrane functionalized (without antibodies) with TEOS and PyrT3Si (spectral curve E);
- Fig. 12 shows images taken with the confocal microscope of a material (in fibres) treated in accordance with the present invention;
- Fig. 13 shows images taken with the confocal microscope of a control material (in fibres) (not a material treated in accordance with the present invention);
- Fig. 14 shows images taken with the confocal microscope of a material (in fibres) treated in accordance with the present invention;
- Fig. 15 shows images taken with the confocal microscope of a material (in fibres) treated in accordance with the present invention; and
- Fig. 16 schematically illustrates the reactions that take place during the silanization of TEOS.

### DETAILED DESCRIPTION

In accordance with a first aspect of the present invention, there is provided a method of making a modified membrane. The method comprises a reaction step, during which a plurality of molecules of at least a first alkoxysilane is silanized in the presence of water so as to obtain at least one silanization product (more precisely, a silicate lattice), and a plurality of molecules of at least one alcohol.

According to some embodiments, the reaction step (and therefore silanization) takes place in an aqueous solution.
The method further comprises a combination step, during which the silanization product, at least one activated compound, a base membrane and water are placed together so as to obtain a given mixture; and a drying step (aging), during which the given mixture is dried (most of the water evaporates) so as to obtain the modified membrane, which comprises the base membrane, the silanization product and the activated compound.
It should be noted that, in particular, in this way the activated compound is enclosed in the silanization product (and/or between the silanization product and the base membrane).

According to specific embodiments, the base membrane is from 89% (in particular, from 91%) to 96% (in particular, to 94%; more in particular, to 95%) by weight, relative to the sum of the weights of the base membrane, of the activated compound and of the silanization product; the silanization product is from 3% (in particular, from 5%; more in particular, from 6%) to 10% (in particular, to 9%; more in particular, to 8%) relative to the sum of the weights of the base membrane, of the activated compound and of the silanization product; the activated compound is from 0.02% (in particular, from 0.05%) to 0.5% (in particular, to 0.2%) by weight, relative to the sum of the weights of the base membrane, of the activated compound and of the silanization product.

The base membrane is a polymer membrane, in particular a porous polymer membrane, in particular for filtration (more in particular, for ultrafiltration).

Advantageously, the combination step takes place (at least partially) at the same time as the reaction step. In other words, according to preferred embodiments, during the reaction step the plurality of molecules of at least the first alkoxysilane is silanized in the presence of water, of the activated compound and of the base membrane so as to obtain a given mixture comprising at least one silanization product (more precisely a silicate lattice), water, the activated compound and the base membrane (and a plurality of molecules of at least one alcohol) .

According to some embodiments, (at least) the combination step is completed in the presence of the base membrane and of the activated compound.

Advantageously but not necessarily, the method comprises a purification step to at least partially remove the molecules of said alcohol from the silanization product. In particular, the purification step is at least partially after the reaction step and before the drying step. In some cases, the purification step is (at least partially) before the combination step.

The first alkoxysilane is chosen in the group consisting of: tetraalkoxysilane, trialkoxyorganosilane (and a combination thereof).

According to some embodiments, the first alkoxysilane has the following formula: 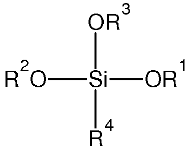 wherein R¹, R² and R³ represent, each independently of one another, a C₁-C₄ alkyl, and R⁴ is chosen in the group consisting of: aromatic group (C₇-C₂₂), aliphatic group (in particular, alkyl) (C₁-C₅, more precisely, C₁-C₄), alkoxy group (C₁-C₄). In particular, R⁴ is a C₁-C₄ alkoxy. In some cases, R¹, R² and R³ represent, each independently of one another, a C₁-C₂ alkyl and R⁴ is a C₁-C₂ alkoxy group.

In some cases, when R⁴ is an aromatic group, it has one or more aromatic rings connected to the silicon (Si) through an aliphatic group (in particular, C₁-C₆). In particular, R⁴ has one or more (more precisely, from one to five; in some cases one) aromatic rings bound to one another in sequence and bound to the silicon through an aliphatic group (in particular, alkyl) (C₁-C₅).

According to specific embodiments, the first alkoxysilane is chosen in the group consisting of: TEOS (tetraethyl orthosilicate or tetraethoxysilane), TMOS (tetramethyl orthosilicate) (and a combination thereof). In particular, the second alkoxysilane comprises (is) TEOS (tetraethyl orthosilicate or tetraethoxysilane).

It must be noted that during and after the combination step, the base membrane and the first alkoxysilane cooperate with each other to exert intermolecular forces (weak - e.g. hydrogen bonds) to connect the base membrane and the first alkoxysilane. Advantageously but not necessarily, the base membrane has oxygen atoms capable of being part of hydrogen bonds.

In some cases, the base membrane has a plurality of (delocalized) conjugated systems π. In particular, the base membrane has a plurality of second aromatic groups (in other words, in these cases, the conjugated systems π are aromatic groups).

According to the type of base membrane and of alkoxysilanes, the conjugated systems π (more precisely the aromatic groups) can also play a role to exert (weak) intermolecular forces to connect the base membrane and the first alkoxysilane.

Advantageously but not necessarily, the membrane has a thickness from 40 (more precisely, from 45) to 400 (more precisely, to 100) pm. In some cases, the membrane has a thickness up to 60 (in particular, up to 50) pm.

Advantageously but not necessarily, the membrane has a porosity with a cut-off from 10 (more precisely, from 14) to 100 (more precisely, to 20) KDalton. Cut-off means the molecular weight of the molecules that are treated to 90% by the membrane.

According to specific embodiments, the base membrane comprises (is) a polymer chosen in the group consisting of: polysulfone, polyethersulfone, polyacrylonitrile, ethylene vinyl alcohol, polyphenylene, polysulfone with polyvinylpyrrolidone, polyethersulfone with polyvinylpyrrolidone, polyimide, polyetherimide, polyetherketone.

As is known:
polysulfone is a polymer that has (consists of) the following repetitive unit: 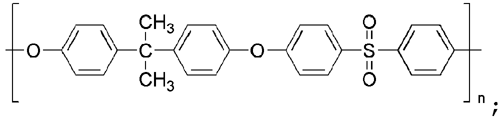
polyethersulfone is a polymer that has (consists of) the following repetitive unit 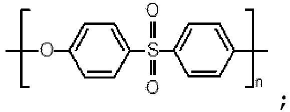
polyphenylsulfone is a polymer that has (consists of) the following repetitive unit 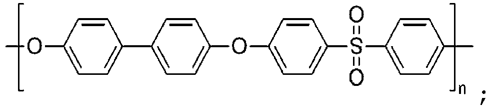
polyacrylonitrile is a polymer that has (consists of) the following repetitive unit 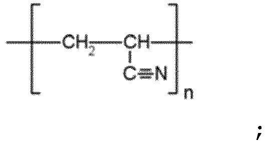
ethylene vinyl alcohol is a copolymer of ethylene and vinyl alcohol that has (consists of) the following repetitive unit 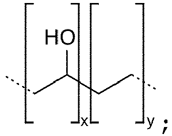
polyphenylene is a polymer that has (consists of) the following repetitive unit 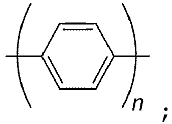
polysulfone with polyvinylpyrrolidone is a mixture of polysulfone and polyvinylpyrrolidone, which is a polymer that has (consists of) the following repetitive unit 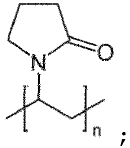
polyethersulfone with polyvinylpyrrolidone is a mixture of polyethersulfone and polyvinylpyrrolidone;
polyimide is a family of polymers that has (consists of) the following repetitive unit 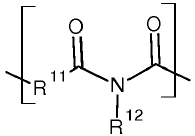
wherein R¹¹ and R¹² are, each independently of one another, aliphatic (alkyl) or aromatic groups (in particular, C₄-C₆ aromatic groups);
polyetherimide is a polymer that has (consists of) the following repetitive unit 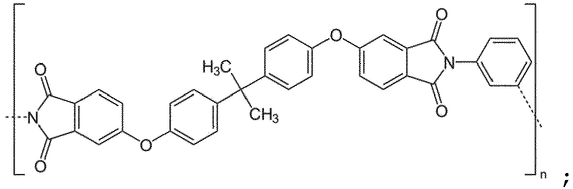 and
polyetherketone is a polymer that has (consists of) the following repetitive unit

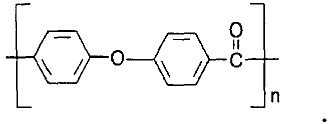

More precisely, the base membrane comprises (is made of) a polymer chosen in the group consisting of: polysulfone, polyethersulfone, polyphenylsulfone, polyacrylonitrile, ethylene vinyl alcohol, polysulfone with polyvinylpyrrolidone, polyethersulfone with polyvinylpyrrolidone, polyetherimide, polyetherketone. Even more precisely, the base membrane comprises (is made of) a polymer chosen in the group consisting of: polysulfone, polyethersulfone, polyphenylsulfone, polyetherimide, polyetherketone.

According to some embodiments, the base membrane comprises (is made of) a polymer chosen in the group consisting of: polysulfone, polyethersulfone, polyphenylsulfone (and a combination thereof). In some specific cases, the base membrane comprises (is) polysulfone.

In particular, the base membrane is chosen in the group consisting of: a flat membrane, a tubular membrane, a plurality of fibres, in particular hollow fibres, and a combination thereof.

According to some embodiments, the base membrane comprises (is) a plurality of fibres, in particular hollow fibres. In particular, the fibres can be prepared according to the description provided in the patent application published with the number EP2316560A1. Fibres of this type are also marketed by Medica spa (Via Degli Artigiani, 7, 41036 Medolla MO, Italy) with the name Medisulfone®.

The activated compound is a compound chosen in the group consisting of: protein, polypeptide, oligopeptide, and a combination thereof.

In particular, the activated compound has no alkoxysilane moiety.

Advantageously but not necessarily, the activated compound has a recognition moiety. According to some embodiments, the activated compound comprises (is) a recognition biomolecule. More in particular, the activated compound comprises (is) a compound chosen in the group consisting of: protein, polypeptide and a combination thereof. Even more in particular, the activated compound comprises (is) a protein.

In some cases, the activated compound comprises (is) an antibody (monoclonal or polyclonal).

According to some specific examples, the activated compound comprises (is) an anti-LDL-C or anti-ApoBlOO antibody that can be used in LDL-apheresis treatments (and that has the possibility of binding both the lipoprotein LDL and the lipoprotein (a)), an anti-PCR (C-Reactive Protein) antibody, an anti-proinflammatory cytokine (anti-TNF-alpha) antibody and/or autologous anti-inflammatory factors antibody (such as the rheumatoid factor).

In these cases, the use of the membrane experimentally exhibits surprising effects in selective plasmapheresis treatments.

In particular, the method is a sol-gel method and comprises a mixing step, during which a sol mixture is prepared by mixing a formulation comprising the first alkoxysilane and water. More in particular, a gel is obtained during the drying step. More in particular, the mixing step is before the reaction step.

In some cases, the method comprises a washing step, which takes place after the drying step and during which the modified membrane is washed (in particular with water).

Advantageously but not necessarily, during the reaction step the plurality of molecules of the first alkoxysilane is silanized together with a plurality of molecules of a second alkoxysilane, which has at least one alkoxysilane moiety and at least one aromatic group.

Advantageously but not limitedly, the second alkoxysilane has at least two alkoxysilane moieties.

According to some embodiments, the second alkoxysilane has the following formula (II): 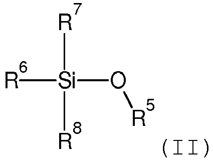 wherein R⁵ represents a C₁-C₄ alkyl, (in particular C₁-C₂), R⁶ represents the first aromatic group (C₇-C₂₂), R⁷ and R⁸ are chosen, each independently of one another, in the group consisting of: aromatic group, aliphatic group (in particular C₁-C₆), alkoxy group (in particular C₁-C₆).

Advantageously but not necessarily, at least one between R⁷ and R⁸ is a alkoxy group (in particular C₁-C₆; more in particular C₁-C₄). More precisely, in some cases, R⁷ has the formula -OR⁹ wherein R⁹ is a C₁-C₄ alkyl (in particular, C₁-C₂). According to some particular embodiments, in addition (or alternatively) R⁸ has the formula -OR¹⁰ wherein R¹⁰ is a C₁-C₄ alkyl (in particular, C₁-C₂).

In some cases, R⁶ has at least two aromatic heterocycles, which are fused or directly bound together.

In particular, R⁶ (and/or R⁷ and/or R⁸) has one or more aromatic rings connected to the silicon (Si) through an aliphatic group (in particular, C₁-C₅).

In particular, R⁶ (and/or R⁷ and/or R⁸) has one or more (more precisely, from one to five; in some cases one) aromatic rings bound to one another in sequence; more in particular, the aromatic rings are bound to the silicon through an aliphatic (alkyl) group (C₁-C₄).

According to some embodiments, the aromatic rings are chosen, each independently of one another, in the group consisting of: phenyl, thiophene, pyridine (and a combination thereof). More precisely, the aromatic rings are chosen, each independently of one another, in the group consisting of: thiophene, pyridine (and a combination thereof).

In some cases, R⁶ (and/or R⁷ and/or R⁸) has an aromatic chain comprising (in particular, consisting of) from two to five aromatic rings bound directly (without the interposition of other groups) to one another in sequence.

In particular, R⁶ (and/or R⁷ and/or R⁸) has the following portion: 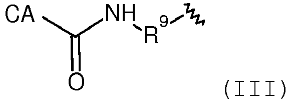 wherein R⁹ is a C₁-C₅ alkyl (in particular C₂-C₄) and is bound to the Silicon (Si), CA is the aromatic chain.

According to specific embodiments, the second alkoxysilane is

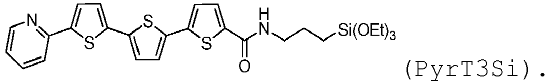

According to some embodiments, the reaction step and/or the combination step takes place without surfactants (for example, as described in the patent application published with the number EP2328620A1).

In accordance with a second aspect of the present invention, a modified membrane is provided. In particular, the modified membrane is obtained according to the method described above (in accordance with the first aspect of the invention).

The modified membrane typically comprises the base membrane, which is polymeric, in particular a porous polymer membrane, in particular for filtration (more in particular, for ultrafiltration); at least one silicate lattice, which is arranged on the base material; and an activated compound, which is enclosed in the silicate lattice.

More precisely, the base membrane, the silicate lattice, and/or the activated compound are as defined in accordance with the first aspect of the present invention.

In particular, the base membrane and the silicate lattice are connected to each other by means of (weak) intermolecular forces.

According to specific embodiments, the modified membrane has from 89% (in particular, from 91%) to 96% (in particular, to 94%; more in particular, to 95%) by weight, relative to the total weight of the modified membrane, of the base membrane; from 3% (in particular, from 5%; more in particular, from 6%) to 10% (in particular, to 9%; more in particular, to 8%) by weight, relative to the total weight of the modified membrane, of the silicate lattice; from 0.02% (in particular, from 0.05%) to 0.5% (in particular, to 0.2%) by weight, relative to the total weight of the modified membrane, of the activated compound.

In accordance with a third aspect of the present invention, there is provided a cartridge for dialysis, comprising the modified membrane in accordance with the second aspect of the present invention.

In accordance with a third aspect of the present invention, there is provided a use of the modified membrane in accordance with the second aspect of the present invention for the purification (filtration) of a fluid. In particular, the fluid is a biological fluid (in particular in dialysis procedures). More precisely, the fluid is plasma. In some cases, the fluid is blood.

According to some embodiments, there is provided a use of the modified membrane in accordance with the second aspect of the present invention for the purification of water.

### Example 1

This example illustrates the procedure for the preparation of the sol-gel precursor solution and thus the functionalization of polysulfone membranes and fibres.

### 1.1 Materials and methods

The polysulfone (PS) membranes were prepared starting from PS Aldrich (Mw ∼35.000 by LS, media Mn ∼16.000 by MO, in pellets) by means of a procedure known in the literature and indicated in the article Colloid Interface Sci. 338, 121-127 (2009).

The Medisulfone® fibres (MS - polysulfone hollow fibres) were supplied by Medica spa.

### 1.2 Preparation of the sol-gel precursor solution (sol)

A mixture of TEOS (tetraethyl orthosilicate) or TMOS (tetramethyl orthosilicate) (20 mmol), purified and deionized water (Milli-Q - 84 mmol) and HCl (0.5 M, 0.11 ml) was stirred at room temperature for 25 minutes, after which 0.005 moles of 5"-(pyridin-2-yl)-N-(3-(triethoxysilyl)propyl)-[2,2':5',2''-terthiophene]-5-carboxyamide (PyrT3Si, 0.5 mg) was added (Chem. Commun., 2011, 47, 1689-1691) and the mixture was left under stirring for further 5 minutes. The mixture was then sonicated (for 30 minutes) to obtain a homogeneous solution; 5 ml of purified and deionized H₂O (Milli-Q) was added to this solution. The alcohol formed as by-product of the hydrolysis and condensation of the siloxane precursors (MeOH for TMOS and EtOH for TEOS) was removed in the rotavapor (200 mbar, 40°C, 30 minutes) (Ferrer, M. L., Del Monte F., Levy, L. Chem. Mater. 2002, 14, 3619). An example of schematization of condensation of the siloxane precursors is shown in Fig. 16.

At this point, 0.5 ml of phosphate buffer having pH 6 (until reaching pH 6), 25 mg of the polysulfone target substrate (membrane or fibre, according to the tests carried out and as better described in paragraph 1.3 below) and the biomolecule of interest (in the case of use of AbI, 30pL of a solution with concentration 500pg/mL thus corresponding to 15pg of AbI; in the case of use of AbII, around 24pg of AbII) were added to 1 mL sol precursor (obtained as described above) and product obtained was left to dry (age) for several days (variable according to the polysulfone substrate as better described in paragraph 1.3).

The biomolecules of interest used are the primary antibody (AbI) Goat anti-AQP4 and secondary antibody (AbII) Alexa Fluor 595-conjugated donkey anti-goat. AbI and AbII are capable of binding to each other.

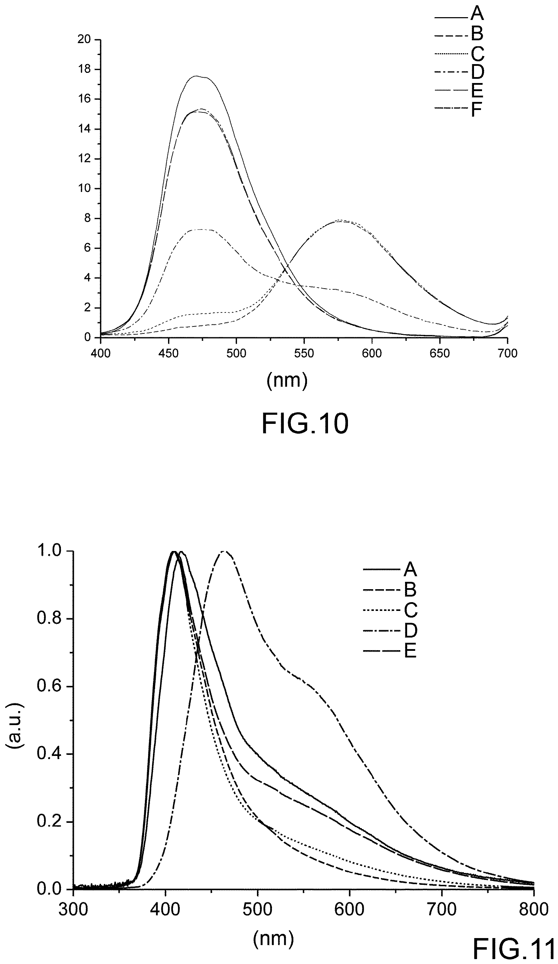

Triethoxysilane PyrT3Si has a photoluminescence spectrum variable according to the pH. Photoluminescence spectra (λexc = 350 nm, Perkin-Elmer LS50 spectrophotometer excitation at the maximum absorption wavelength) of triethoxysilane at different pHs are illustrated in Fig. 10, where the curve A is the spectrum in ethanol (neutral initial pH), the curve B is the spectrum at pH 1 (acidity reached with the addition of hydrochloric acid), the curve C is the spectrum at pH 4 (acidity reached with the addition of hydrochloric acid), the curve D is the spectrum at pH 5 (by means of the addition of hydrochloric acid), the curve B is the spectrum at pH 7 (reached by means of the addition of TEA - triethylamine to the initial acid solution). The abscissa axis indicates the wavelength (in nm), the ordinate axis indicates the emission intensity (in arbitrary units - a.u.).

### 1.3 Functionalization of PS membranes

The membrane (around 25 mg) was immersed in the sol precursor solution (around 1 mL) obtained as described in paragraph 1.2 above room temperature and the solution was left to dry for 13 days. Once dried it was immersed in H₂O and sonicated for 30 minutes to remove the excess xerogel (silicates obtained) then washed again in running H₂O for 30 minutes.

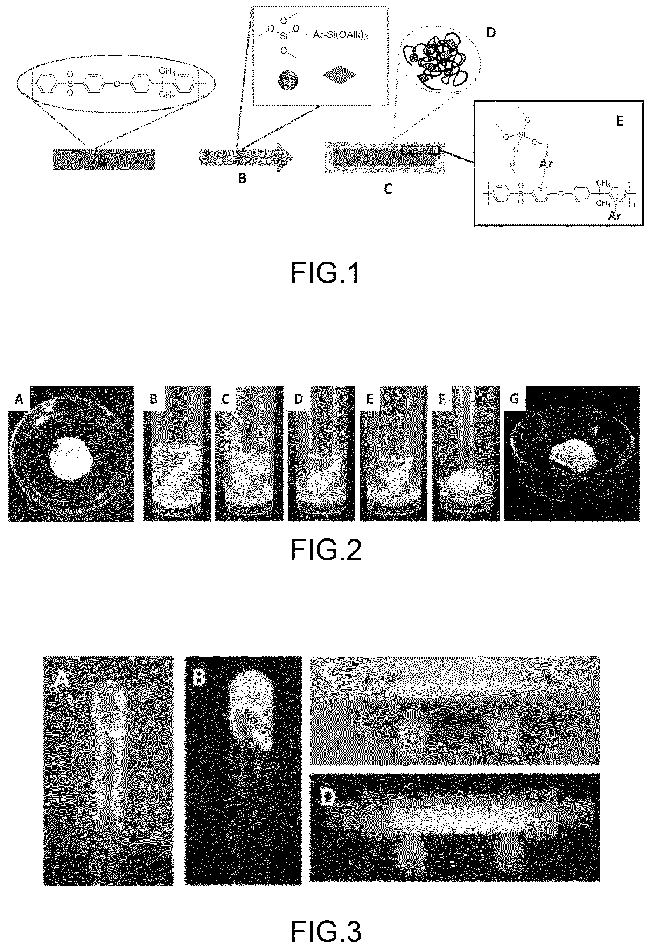

The procedure followed is illustrated in Fig. 2, in which photograph A shows the initial polysulfone membrane, photographs B-F show various steps of the aging process (the photographs were taken on days 1, 5, 7, 9 and 13, respectively) and photograph G shows the membrane obtained.

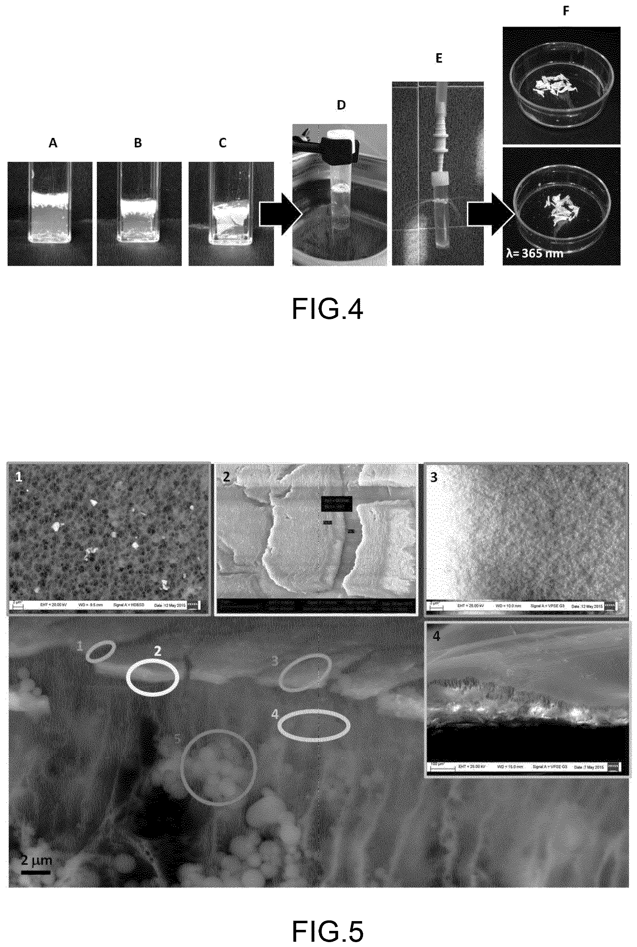

Fig. 5 contains SEM (scanning electron microscope) images of a membrane functionalized with organosilicates and AbI. In the portion identified with number 1 in Fig. 5, the porous surface of the membrane is highlighted. In the portions identified with the numbers 2 and 3, the organosilicon coating and its morphology are highlighted. In the portion identified with the number 4 in Fig. 5, the morphology of a section of the membrane is highlighted. In the portion identified with the number 5 in Fig. 5, the polysulfone microparticles adjacent to the section are highlighted.

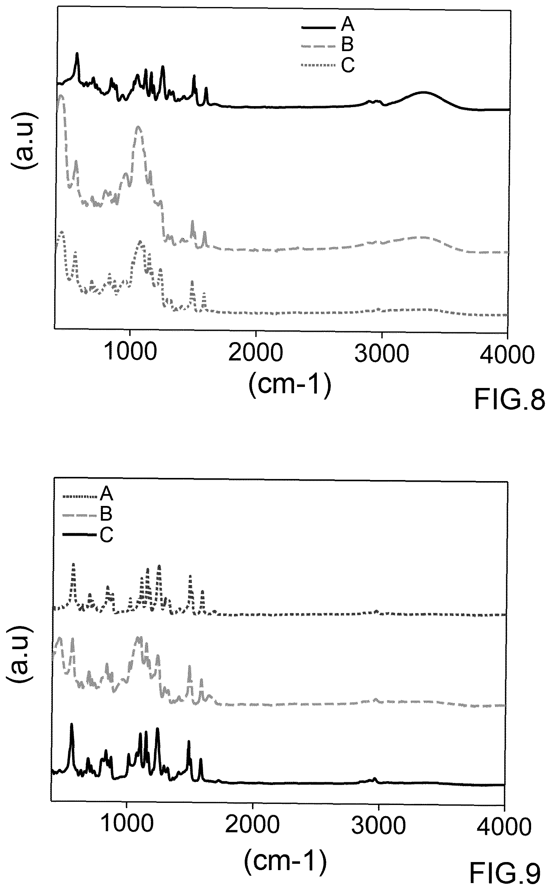

Fig. 9 illustrates the ATR (attenuated total reflectance) spectra of untreated PS membranes (spectral curve A), of PS membranes treated (without antibodies) as described above with TEOS (spectral curve B) and PS membranes treated (without antibodies) as described above with TMOS (spectral curve C). The abscissa axis indicates the wavenumber (in cm⁻¹), the ordinate axis indicates the absorbance (in arbitrary units - a.u.). Comparison between the spectra shows how the signals of the treated membranes coincides with the sum of the spectra of each component.

### 1.4 Functionalization of the MS fibres

In a cartridge with a volume of 6 ml containing MS fibres (0.8-1 g) there were inserted 6.08 ml of a mixture comprising: 2.08 g of TEOS, 0.76 ml of water, 0.05 g of HCl 0.5 M, 0.23 mg of PyrT3Si and 3.04 ml of buffer 0.1 M Na₃PO₄. Once dried (7 days) it was immersed in H₂O and sonicated for 30 minutes to remove the excess xerogel, then washed again with running H₂O for 30 minutes.

The procedure followed and the results obtained are illustrated in Fig. 3, where photograph A shows a test tube with sol-gel precursors used to modify the polysulfone hollow membrane fibres in the cartridge. Photograph B shows the same test tube illuminated with UV light (λexc=365 nm), the precursors having a blue colour. Photograph C is an image of the MS cartridge. Photograph D shows the same cartridge post-filled with the sol-gel precursors (λexc=365 nm), the fibres having a blue colour.

### Example 2

This example describes tests carried out on functionalized substrates (fibres and membranes) obtained following the methodology of Example 1.

### 2.1 Functionalization of lengths of fibre

The lengths (around 25 mg) were immersed in the sol precursor solution (around 1 mL) obtained as described above in paragraph 1.2 at room temperature and the solution was dried for 7 days. Once dried, it was immersed in H₂O and sonicated for 30 minutes to remove the excess xerogel, then washed again in running H₂O for 30 minutes.

The procedure followed is illustrated in Fig. 4, where photographs A, B and C show the aging process at 1, 3 and 7 days, respectively, photograph D shows the purification step by means of sonication, photograph E shows purification by means of washing in running water and photographs F show the fibres obtained in normal light (above) and with UV illumination (below - they are coloured blue; the UV illumination is at λexc = 365 nm) .

### 2.2 MS fibres

An immunofluorescence experiment was carried out on the following materials:
1) MS fibres;
2) MS-Sol-gel fibres not functionalized with antibodies (MS-Sol-gel);
3) MS-Sol-gel fibres functionalized with Ab I antibody as described above (MS-Sol-gel AbI);
4) MS-Sol-gel fibres functionalized with Ab II antibody as described above (MS-Sol-gel AbII).

All three of these types MS-Sol-gel fibres (obtained according to the description in example 2.1 indicated above) were incubated with Bovine serum albumin 3% in phosphate-buffered saline (PBS) 0.1 M for 30 minutes, in order to saturate all reactive sites present in the samples.

Subsequently, the MS-Sol-gel fibres and MS-Sol-gel AbII were incubated with the primary antibody at a dilution of 1:300. The samples thus treated were called MS-Sol-gel+AbI and MS-Sol-gel AbII+AbI, respectively.

After three washes in PBS for a duration of 5 minutes respectively, the MS-Sol-gel+AbI and MS-Sol-gel AbI samples were incubated with secondary antibody (AbII) Alexa Fluor 595-conjugated donkey anti-goat (1:1000) for 1 hour. The samples thus treated were called MS-Sol-gel+AbI+AbII and MS-Sol-gel AbI+AbII.

After rinsing off the excess secondary antibody, the samples were dried.

The dried samples were mounted on an inverted confocal microscope (Nikon TE 2000) equipped with a 40 × lens and a fluorescence emission laser diode with excitation at 488 nm. The fluorescence was collected by exciting at 488 nm (laser He-Ne Ar +) both the samples incubated with the antibodies and those not incubated and used as controls (MS, MS-Sol-gel, MS-Sol-gel AbI, MS-Sol-gel AbII).

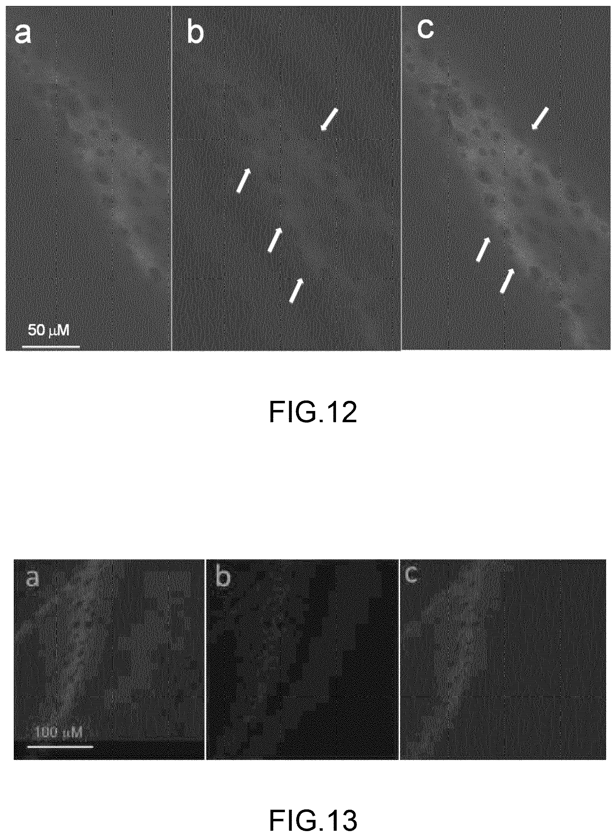

Fig. 12 shows images taken with the confocal microscope of a sample of MS-Sol-gel AbI+AbII fibres. Distributions of AbI and AbII bound to each other (see arrows) are visible and recognizable. The green channel (imagine (a)) shows emission of the coating (i.e. of the siloxane network alone); the red channel (image (b)) shows distribution of the AbII as localized spots probably due to the primary and secondary antibodies bound through the coating; digital superimposition of the two previous images (image (c)).

Fig. 13 shows images of a control experiment on simple lengths of MS fibres incubated with AbI and AbII. No fluorescent signal was observed by excitation at the same laser power and optical acquisition as the experiment of Fig. 12. These confocal microscopy images captured in the green channel (image (a)), red (image (b)) and combinations thereof (image (c)) confirm that the untreated MS fibres do not bind to AbI and AbII.

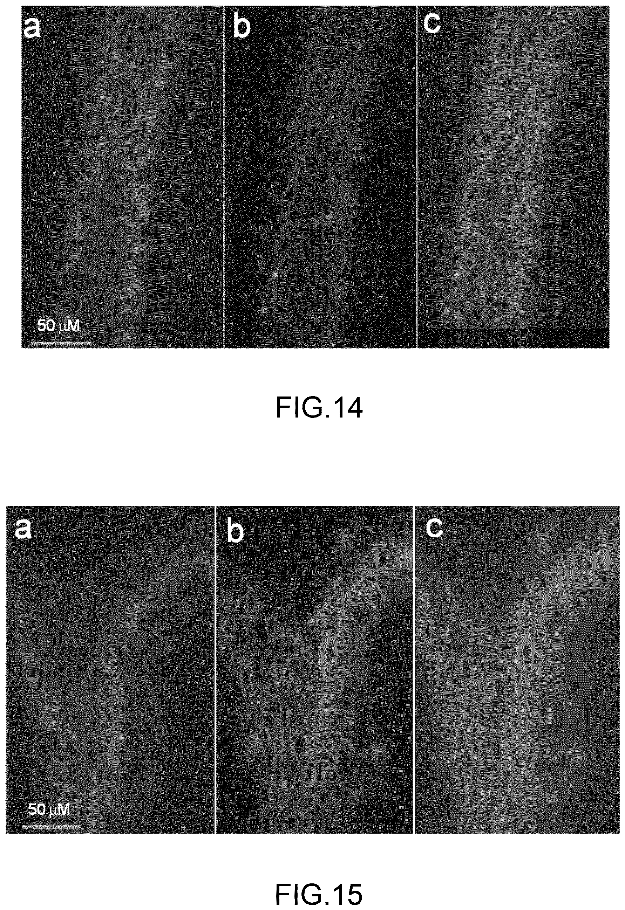

Fig. 14 shows images taken with the confocal microscope of a sample of MS-Sol-gel AbII+AbI fibres. Distributions of AbI and AbII bound to each other (see arrows) are visible and recognizable. The green channel (image (a)) shows emission of the coating (i.e., the siloxane network alone); the red channel (image (b)) shows distribution of the AbII as localized spots probably due to the primary and secondary antibodies bound through the coating; the digital superimposition of the two previous images (image (c)).

Fig. 15 shows images taken with the confocal microscope of a sample of MS-Sol-gel AbII fibres. Distributions of AbI and AbII bound to each other (see arrows) are visible and recognizable. The green channel (image (a)) shows emission of the coating (i.e. the siloxane network alone); the red channel (image (b)) shows distribution of the AbII as localized spots probably due to the primary and secondary antibodies bound through the coating; the digital superimposition of the two previous images (image (c)).

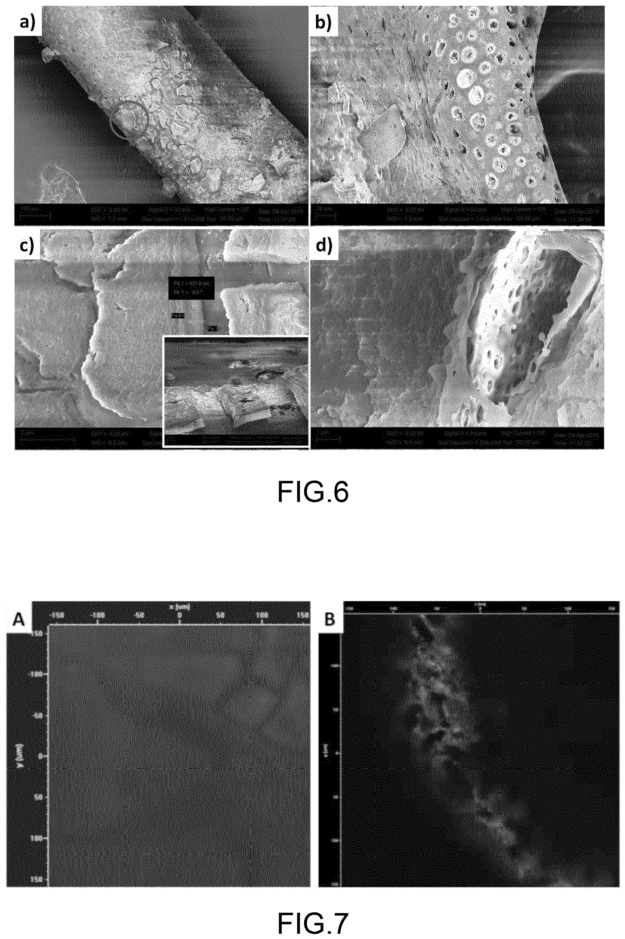

Fig. 7 shows two microphotographs taken with confocal microscope with an illumination at λ = 405 nm. The microphotograph A (on the left) relates to a sample of polysulfone membrane functionalized with organosilica (without antibodies). The microphotograph B (on the right) relates to a sample of MS fibre functionalized with organosilica (without antibodies). Non-functionalized membranes and fibres show a very weak emission signal (in any case below the signal of the functionalized membranes and fibres).

Fig. 6 contains SEM (environmental scanning electron microscope) images of lengths of MS fibres functionalized with organosilicates and ABI. The image identified with the letter (c) of Fig. 6 illustrates in an enlarged scale the circled part of the image identified with the letter (a).

Fig. 8 illustrates the ATR (attenuated total reflectance) spectra of untreated MS fibres (spectral curve A), of MS fibres functionalized (without antibodies) as described above with TEOS (spectral curve B) and MS fibres functionalized (without antibodies) as described above with TMOS (spectral curve C). The abscissa axis indicates the wavenumber (in cm⁻¹), the ordinate axis shows the absorbance (in arbitrary units - a.u.). Comparison between the spectra shows how the signals of the treated membranes coincide with the sum of the spectra of each component.

### 2.3 Further tests

Fig. 11 illustrates photoluminescence spectra (λexc = 350 nm, Perkin-Elmer LS50 spectrophotometer excitation at the maximum absorption wavelength) of MS fibres functionalized (without antibodies) as described above with TEOS and PyrT3Si (spectral curve A), of untreated MS fibres (spectral curve B), of an untreated PS membrane (spectral curve C), of TEOS and PyrT3Si sol-gel (spectral curve D) and of a PS membrane functionalized (without antibodies) as described above with TEOS and PyrT3Si (spectral curve E). The abscissa axis indicates the wavelength (in nm), the ordinate axis indicates the intensity (in arbitrary units - a.u.). By comparing Figs. 10 and 11, it can be confirmed that the sol-gel is effectively present on the membranes.

### Example 3

This example describes the flow tests carried out and the results obtained.

There was used a device comprising a cartridge containing Medisulfone® hollow fibre inserted in a water recirculation circuit, consisting of a peristaltic pump, pipes and points for measuring the pressure by means of transducer. The test was carried out on standard device (cartridge containing untreated Medisulfone® hollow fibre), device functionalized with sol-gel and device functionalized with sol-gel and AbI.
The device functionalized with sol-gel was obtained as described in example 1.4 above.

The device functionalized with sol-gel and AbI was obtained in the same way as the device functionalized with sol-gel with a quantity of AbI (the proportions of the various components are as indicated in example 1.2 above).
The pressure was measured at the inlet and at the outlet of the device at three different working flow rates (150-200-250 ml/min) .

Table 1 below shows the inlet and outlet pressures of the device at different water flow rates. Moreover, the related delta P (Pin - Pout) was calculated, to allow comparison between devices containing untreated fibre (Ref. MS samples S), a control device containing fibres functionalized with organosilicates alone (Std) and a device containing fibres functionalized with organosilicates and AbI (modified MS).

**Table 1**

| | Flow rate (ml/min) | P in (mmHg) | P out (mmHg) | Delta P (mmHg) |
|---|---|---|---|---|
| Ref MS sample 1 | 150 | 44 | 3 | 41 |
| | 200 | 74 | 15 | 59 |
| | 250 | 93 | 23 | 70 |
| Ref MS sample 2 | 150 | 76 | 0 | 76 |
| | 200 | 148 | 16 | 132 |
| | 250 | 190 | 25 | 165 |
| Ref MS sample 3 | 150 | 103 | 0 | 103 |
| | 200 | 170 | 9 | 161 |
| | 250 | 250 | 24 | 226 |
| Modified MS | 150 | 65 | 5 | 60 |
| | 200 | 104 | 13 | 91 |
| | 250 | 165 | 29 | 136 |
| Std | 150 | 119 | 9 | 110 |
| | 200 | 190 | 19 | 171 |
| | 250 | 230 | 23 | 207 |

The results of the tests carried out show that the flow of the filter through the cartridges is not influenced by functionalization of the fibres and therefore that filters containing functionalized fibres can be used technically.

## Claims

1. A method of making a modified membrane; the method comprises a reaction step, during which a plurality of molecules of at least one first alkoxysilane is silanized in the presence of water, so as to obtain at least one silanization product, in particular a silicate lattice, and a plurality of molecules of at least one alcohol;
a combination step, which at least partially takes place at the same time with the reaction step and during which the silanization product, at least one activated compound, a base membrane, which is a porous polymer membrane for filtration, in particular for ultrafiltration, and water are put together so as to obtain a given mixture; and
a drying step, during which the given mixture is dried so as to obtain the modified membrane, which comprises the base membrane, the silanization product and the activated compound;
the first alkoxysilane is chosen in the group consisting of: tetraalkoxysilane, trialkoxyorganosilane, and a combination thereof; the activated compound is chosen in the group consisting of: protein, polypeptide, oligopeptide, and a combination thereof.

2. A method according to claim 1, wherein the first alkoxysilane has the following formula: 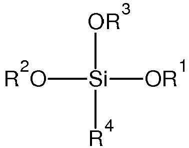
wherein R¹, R² and R³ represent, each independently of one another, a C₁-C₄ alkyl, and R⁴ is chosen in the group consisting of: aromatic group, aliphatic group, alkoxy group;
the base membrane being a polymer chosen in the group consisting of: polysulfone, polyethersulfone, polyphenylsulfone, polyetherimide, polyetherketone, and a combination thereof;
the activated compound has a recognition moiety.

3. A method according to claim 1 or 2, wherein R⁴ is a C₁-C₄ alkoxy group; the base material is chosen in the group consisting of: polysulfone, polyethersulfone, polyphenylsulfone, and a combination thereof.

4. A method according to any one of the preceding claims, wherein R¹, R² and R³ represent, each independently of one another, a C₁-C₂ alkyl, and R⁴ is a C₁-C₂ alkoxy group; the activated compound is a protein.

5. A method according to one of the preceding claims, wherein the activated compound comprises an antibody, in particular a monoclonal or polyclonal antibody.

6. A method according to any one of the preceding claims, which is a sol-gel method and comprises a mixing step, during which a sol mixture is prepared by mixing a formulation comprising the first alkoxysilane and water; in particular, a gel is obtained during the drying step; in particular, the method comprises a washing step, which takes place after the drying step and during which the modified membrane is washed (in particular with water).

7. A method according to any one of the preceding claims, wherein the base membrane is chosen in the group consisting of: a flat membrane, a tubular membrane, a plurality of fibres, in particular hollow fibres, and a combination thereof; in particular, the base membrane comprises a plurality of hollow fibres.

8. A method according to any one of the preceding claims, wherein, during the reaction step, the plurality of molecules of the first alkoxysilane is silanized together with a plurality of molecules of a second alkoxysilane, which has at least one alkoxysilane moiety and a first aromatic group; the base material having a plurality of second aromatic groups.

9. A method according to any one of the preceding claims and comprising a purification step, which at least partially takes place after the reaction step and before the drying step, so as to at least partially remove the molecules of said alcohol from the silanization product; the second alkoxysilane has the following formula: 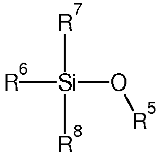 wherein R⁵ represents a C₁-C₄ alkyl, R⁶ represents the first aromatic group, R⁷ and R⁸ are chosen, each independently of one another, in the group consisting of: aromatic group, aliphatic group, alkoxy group; in particular, R⁷ and R⁸ are, each independently of one another, a C₁-C₂ alkoxy group; R⁵ represents a C₁-C₂ alkyl group; R⁶ has at least two aromatic heterocycles, which are fused or directly bound together.

10. A modified membrane obtained by the method according to any one of the preceding claims and comprising a base membrane, which is a porous polymer membrane for filtration, in particular for ultrafiltration; at least one silicate lattice, which is arranged on the base material; and an activated compound, which is enclosed in the silicate lattice.

11. A modified membrane according to claim 10 and comprising 89% to 96% by weight, relative to the total weight of the modified membrane, of the base membrane; 3% to 10% by weight, relative to the total weight of the modified membrane, of the silicate lattice; 0.02% to 0.5%, relative to the total weight of the modified membrane, of the activated compound.

12. A filtering cartridge for dialysis devices comprising the modified membrane according to claim 10 or 11.

13. A use of a membrane according to claim 10 or 11, for the purification of a fluid.

14. A use according to claim 13, for the purification of a biological fluid.

## Patentansprüche

1. Verfahren zur Herstellung einer modifizierten Membran; das Verfahren umfasst einen Reaktionsschritt, während welchem eine Vielzahl Moleküle von mindestens einem ersten Alkoxysilan in Gegenwart von Wasser silanisiert wird, um mindestens ein silanisiertes Produkt zu erhalten, insbesondere ein Silikatgitter, und eine Vielzahl Moleküle aus mindestens einem Alkohol;
einen Kombinationsschritt, der mindestens teilweise zur gleichen Zeit mit dem Reaktionsschritt stattfindet und während welchem das silanisierte Produkt, mindestens eine aktivierte Verbindung, eine Grundmembran, welche eine poröse Polymermembran zur Filtration ist, insbesondere zur Ultrafiltration, und Wasser zusammengefügt werden, um eine vorgegebene Mischung zu erhalten; und
einen Trocknungsschritt, während welchem die vorgegebene Mischung getrocknet wird, um die modifizierte Membran zu erhalten, welche die Grundmembran, das silanisierte Produkt und die aktivierte Verbindung umfasst;
das erste Alkoxysilan ist ausgewählt aus der Gruppe bestehend aus:
Tetraalkoxysilan, Trialkoxyorganosilan und einer Kombination daraus; die aktivierte Verbindung ist ausgewählt aus der Gruppe bestehend aus: Protein, Polypeptid, Oligopeptid und einer Kombination daraus.

2. Verfahren nach Anspruch 1, wobei das erste Alkoxysilan die folgende Formel hat: 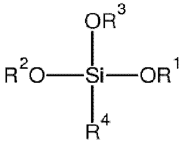
wobei R¹, R² und R³ jeweils unabhängig voneinander ein C₁-C₄-Alkyl darstellen, und R⁴ ausgewählt ist aus der Gruppe bestehend aus: aromatische Gruppe, aliphatische Gruppe, Alkoxygruppe;
wobei die Grundmembran ein Polymer ist, ausgewählt aus der Gruppe bestehend aus: Polysulfon, Polyethersulfon, Polyphenylsulfon, Polyetherimid, Polyetherketon und einer Kombination daraus; die aktivierte Verbindung hat einen Erkennungsteil.

3. Verfahren nach Anspruch 1 oder 2, wobei R⁴ eine C₁-C₄-Alkoxygruppe ist; das Grundmaterial ist ausgewählt aus der Gruppe bestehend aus: Polysulfon, Polyethersulfon, Polyphenylsulfon, und einer Kombination daraus.

4. Verfahren nach einem der vorhergehenden Ansprüche, wobei R¹, R² und R³ jeweils unabhängig voneinander ein C₁-C₂-Alkyl darstellen, und R⁴ ist eine C₁-C₂-Alkoxygruppe; die aktivierte Verbindung ist ein Protein.

5. Verfahren nach einem der vorhergehenden Ansprüche, wobei die aktivierte Verbindung einen Antikörper umfasst, insbesondere einen monoklonalen oder polyklonalen Antikörper.

6. Verfahren nach einem der vorhergehenden Ansprüche, welches ein Sol-Gel-Verfahren ist und einen Misch-Schritt umfasst, während welchem eine Sol-Mischung durch Mischen einer Rezeptur umfassend das erste Alkoxysilan und Wasser hergestellt wird; insbesondere wird während des Trocknungsschritts ein Gel erhalten; insbesondere umfasst das Verfahren einen Wasch-Schritt, der nach dem Trocknungsschritt stattfindet und während welchem die modifizierte Membran gewaschen wird (insbesondere mit Wasser).

7. Verfahren nach einem der vorhergehenden Ansprüche, wobei die Grundmembran ausgewählt ist aus der Gruppe bestehend aus: einer flachen Membran, einer rohrförmigen Membran, einer Vielzahl Fasern, insbesondere Hohlfasern, und einer Kombination daraus; insbesondere umfasst die Grundmembran eine Vielzahl Hohlfasern.

8. Verfahren nach einem der vorhergehenden Ansprüche, wobei während des Reaktionsschritts die Vielzahl Moleküle des ersten Alkoxysilans zusammen mit einer Vielzahl von Molekülen eines zweiten Alkoxysilans, welches mindestens einen Alkoxysilanteil und eine erste aromatische Gruppe hat, silanisiert wird; wobei das Grundmaterial eine Vielzahl zweiter aromatischer Gruppen hat.

9. Verfahren nach einem der vorhergehenden Ansprüche und umfassend einen Reinigungsschritt, der mindestens teilweise nach dem Reaktionsschritt und vor dem Trocknungsschritt stattfindet, um so mindestens teilweise die Moleküle des Alkohols von dem silanisierten Produkt zu entfernen; das zweite Alkoxysilan hat die folgende Formel: 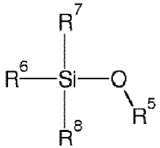 wobei R⁵ ein C₁-C₄-Alkyl darstellt, R⁶ die erste aromatische Gruppe darstellt, R⁷ und R⁸ jeweils unabhängig voneinander ausgewählt sind aus der Gruppe bestehend aus: aromatischer Gruppe, aliphatischer Gruppe, Alkoxygruppe; insbesondere sind R⁷ und R⁸ jeweils unabhängig voneinander eine C₁-C₂-Alkoxygruppe; R⁵ stellt eine C₁-C₂-Alkylgruppe dar; R⁶ hat mindestens zwei aromatische Heterozyklen, die verschmolzen oder direkt miteinander verbunden sind.

10. Modifizierte Membran, die durch das Verfahren nach einem der vorhergehenden Ansprüche erhalten wird und eine Grundmembran umfasst, die eine poröse Polymermembran zur Filtration ist, insbesondere zur Ultrafiltration; mindestens ein Silikatgitter, welches auf dem Grundmaterial angeordnet ist; und eine aktivierte Verbindung, die in dem Silikatgitter eingeschlossen ist, umfasst.

11. Modifizierte Membran nach Anspruch 10 und umfassend 89 bis 96 Gew.-% der Grundmembran, bezogen auf das Gesamtgewicht der modifizierten Membran; 3 bis 10 Gew.-% des Silikatgitters, bezogen auf das Gesamtgewicht der modifizierten Membran; 0,02 bis 0,5 Gew.-% der aktivierten Verbindung, bezogen auf das Gesamtgewicht der modifizierten Membran.

12. Filterkartusche für Dialysegeräte umfassend die modifizierte Membran nach Anspruch 10 oder 11.

13. Verwendung einer Membran nach Anspruch 10 oder 11, für die Reinigung einer Flüssigkeit.

14. Verwendung nach Anspruch 13, für die Reinigung einer biologischen Flüssigkeit.

## Revendications

1. Procédé de fabrication d'une membrane modifiée ; le procédé comprend une étape réactionnelle, durant laquelle une pluralité de molécules d'au moins un premier alkoxysilane est silanisée en présence d'eau, de manière à obtenir au moins un produit de silanisation, en particulier un réseau silicate, et une pluralité de molécules d'au moins un alcool ;
une étape de combinaison, qui a lieu au moins partiellement en même temps que l'étape réactionnelle et durant laquelle le produit de silanisation, au moins un composé activé, une membrane de base, qui est une membrane de polymère poreux pour la filtration, en particulier pour l'ultrafiltration, et l'eau sont placés ensemble pour obtenir un mélange donné ; et
une étape de séchage, durant laquelle le mélange donné est séché de manière à obtenir la membrane modifiée, qui comprend la membrane de base, le produit de silanisation et le composé activé ;
le premier alkoxysilane est choisi dans le groupe constitué par : un tétraalkoxysilane, un trialkoxyorganosilane et une de leurs combinaisons ; le composé activé est choisi dans le groupe constitué par : une protéine, un polypeptide, un oligopeptide et une de leurs combinaisons.

2. Procédé selon la revendication 1, dans lequel le premier alkoxysilane a la formule suivante : 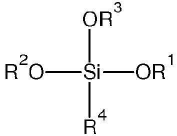
dans laquelle R¹, R² et R³ représentent, chacun indépendamment les uns des autres, un groupe alkyle en C₁ à C₄, et R⁴ est choisi dans le groupe constitué par : un groupe aromatique, un groupe aliphatique, un groupe alkoxy ;
la membrane de base étant un polymère choisi dans le groupe constitué par : une polysulfone, une polyéthersulfone, une polyphénylsulfone, un polyétherimide, une polyéthercétone et une de leurs combinaisons ;
le composé activé a un groupement de reconnaissance.

3. Procédé selon la revendication 1 ou 2, dans lequel R⁴ est un groupe alkoxy en C₁ à C₄ ; le matériau de base est choisi dans le groupe constitué par : la polysulfone, la polyéthersulfone, la polyphénylsulfone et une de leurs combinaisons.

4. Procédé selon l'une quelconque des revendications précédentes, dans lequel R¹, R² et R³ représentent, chacun indépendamment les uns des autres, un groupe alkyle en C₁ ou C₂, et R⁴ est un groupe alkoxy en C₁ ou C₂ ; le composé activé est une protéine.

5. Procédé selon l'une quelconque des revendications précédentes, dans lequel le composé activé comprend un anticorps, en particulier un anticorps monoclonal ou polyclonal.

6. Procédé selon l'une quelconque des revendications précédentes, qui est un procédé sol-gel et comprend une étape de mélange, durant laquelle un mélange sol est préparé en mélangeant une formulation comprenant le premier alkoxysilane et de l'eau ; en particulier, un gel est obtenu durant l'étape de séchage ; en particulier, le procédé comprend une étape de lavage, qui a lieu après l'étape de séchage et durant laquelle la membrane modifiée est lavée (en particulier avec l'eau).

7. Procédé selon l'une quelconque des revendications précédentes, dans lequel la membrane de base est choisie dans le groupe constitué par : une membrane plate, une membrane tubulaire, une pluralité de fibres, en particulier de fibres creuses, et une de leurs combinaisons ; en particulier, la membrane de base comprend une pluralité de fibres creuses.

8. Procédé selon l'une quelconque des revendications précédentes, dans lequel, durant l'étape réactionnelle, la pluralité de molécules du premier alkoxysilane est silanisée ensemble avec une pluralité de molécules d'un second alkoxysilane, qui a au moins un groupement alkoxysilane et un premier groupe aromatique ; le matériau de base ayant une pluralité de seconds groupes aromatiques.

9. Procédé selon l'une quelconque des revendications précédentes et comprenant une étape de purification, qui a lieu au moins partiellement après l'étape réactionnelle et avant l'étape de séchage, de manière à enlever au moins partiellement les molécules dudit alcool du produit de silanisation ; le second alkoxysilane a la formule suivante : 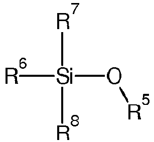 dans laquelle R⁵ représente un groupe alkyle en C₁ à C₄, R⁶ représente le premier groupe aromatique, R⁷ et R⁸ sont choisis, chacun indépendamment l'un de l'autre, dans le groupe constitué par : un groupe aromatique, un groupe aliphatique, un groupe alkoxy ; en particulier, R⁷ et R⁸ sont, chacun indépendamment l'un de l'autre, un groupe alkoxy en C₁ ou C₂ ; R⁵ représente un groupe alkyle en C₁ ou C₂ ; R⁶ a au moins deux hétérocycles aromatiques, qui sont condensés ou directement liés ensemble.

10. Membrane modifiée obtenue par le procédé selon l'une quelconque des revendications précédentes et comprenant une membrane de base, qui est une membrane de polymère poreux pour la filtration, en particulier pour l'ultrafiltration ; au moins un réseau silicate, qui est disposé sur le matériau de base ; et un composé activé, qui est inclus dans le réseau silicate.

11. Membrane modifiée selon la revendication 10 et comprenant 89 % à 96 % en poids, par rapport au poids total de la membrane modifiée, de la membrane de base ; 3 % à 10 % en poids, par rapport au poids total de la membrane de base, du réseau silicate ; 0,02 % à 0,5 %, par rapport au poids total de la membrane modifiée, du composé activé.

12. Cartouche de filtration pour dispositifs de dialyse comprenant la membrane modifiée selon la revendication 10 ou 11.

13. Utilisation d'une membrane selon la revendication 10 ou 11, pour la purification d'un fluide.

14. Utilisation selon la revendication 13, pour la purification d'un fluide biologique.
